(19) Europäisches Patentamt
European Patent Office
Office européen des brevets

(11) **EP 4 060 424 B1**

(12) **FASCICULE DE BREVET EUROPEEN**

(45) Date de publication et mention
de la délivrance du brevet:
**20.11.2024 Bulletin 2024/47**

(21) Numéro de dépôt: **21162933.2**

(22) Date de dépôt: **16.03.2021**

(51) Classification Internationale des Brevets (IPC):
**G04B 17/06** (2006.01)   **G04B 17/22** (2006.01)
**C22C 27/02** (2006.01)   **C22C 14/00** (2006.01)
**C22C 16/00** (2006.01)   **C22F 1/18** (2006.01)

(52) Classification Coopérative des Brevets (CPC):
**G04B 17/066; C22C 14/00; C22C 16/00;
C22C 27/02; C22F 1/18; C22F 1/183; C22F 1/186;
G04B 17/227**

(54) **SPIRAL POUR MOUVEMENT D'HORLOGERIE**

SPIRALFEDER FÜR UHRWERK

HAIRSPRING FOR TIMEPIECE MOVEMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**21.09.2022 Bulletin 2022/38**

(73) Titulaire: **Nivarox-FAR S.A.
2400 Le Locle (CH)**

(72) Inventeurs:
• **CHARBON, Christian
2054 Chézard-St-Martin (CH)**

• **MICHELET, Lionel
1450 Sainte-Croix (CH)**
• **VERARDO, Marco
2336 Les Bois (CH)**

(74) Mandataire: **ICB SA
Faubourg de l'Hôpital, 3
2001 Neuchâtel (CH)**

(56) Documents cités:
**EP-A1- 0 886 195       EP-A1- 3 502 288
EP-A1- 3 502 785       EP-A1- 3 736 639
WO-A1-2018/172164**

**Description**

Domaine de l'invention

L'invention concerne un ressort spiral destiné à équiper un balancier d'un mouvement d'horlogerie. Elle se rapporte également au procédé de fabrication de ce ressort spiral.

Arrière-plan de l'invention

La fabrication de ressorts spiraux pour l'horlogerie doit faire face à des contraintes souvent à première vue incompatibles :

- nécessité d'obtention d'une limite élastique élevée,
- facilité d'élaboration, notamment de tréfilage et de laminage,
- excellente tenue en fatigue,
- stabilité des performances dans le temps,
- faibles sections.

L'alliage choisi pour un ressort spiral doit en outre présenter des propriétés garantissant le maintien des performances chronométriques malgré la variation des températures d'utilisation d'une montre incorporant un tel ressort spiral. Le coefficient thermoélastique, dit aussi CTE de l'alliage, a alors une grande importance. Pour former un oscillateur chronométrique avec un balancier en CuBe ou en maillechort, un CTE de +/- 10 ppm/°C doit être atteint. La formule qui lie le CTE de l'alliage et les coefficients de dilatation du spiral ($\alpha$) et du balancier ($\beta$) est la suivante :

$$CT = \frac{dM}{dT} = \left( \frac{1}{2E} \frac{dE}{dT} - \beta + \frac{3}{2} \alpha \right) \times 86400 \frac{s}{j°C}$$

les variables M et T étant respectivement la marche en s/j et la température en °C, E étant le module de Young du ressort spiral avec (1/E. dE/dT) qui est le CTE de l'alliage spiral, les coefficients de dilatation étant exprimés en °C$^{-1}$.
Pratiquement, le CT est calculé comme suit entre 8°C et 38°C:

$$CT = \frac{(M_{38°C} - M_{8°C})}{30}$$

avec une valeur qui doit être comprise entre - 0,6 et + 0,6 s/j°C.
De l'art antérieur, on connaît des ressorts spiraux pour l'horlogerie réalisés dans des alliages binaires Nb-Ti avec des pourcentages de Ti typiquement compris entre 40 et 60% en poids et plus spécifiquement avec un pourcentage de Ti de 47%. Le document WO 2018/172164 A1 divulgue un spiral composé d'un alliage binaire Nb-Ti. Avec un schéma de déformation et de traitements thermiques adaptés, ce ressort spiral présente une microstructure biphasée comportant du niobium en phase bêta et du titane sous forme de précipités en phase alpha. L'alliage en phase bêta écroui présente un CTE fortement positif et la précipitation de la phase alpha qui possède un CTE fortement négatif permet de ramener l'alliage biphasé à un CTE proche de zéro, ce qui est particulièrement favorable pour le CT.
On observe néanmoins certains désavantages à l'utilisation d'alliages binaires Nb-Ti pour les ressorts spiraux.
Un désavantage des alliages binaires Nb-Ti est lié à la précipitation du titane qui se déroule principalement après l'étape d'estrapadage lors de l'étape de fixage. En pratique, les temps de précipitation sont très longs avec, pour un alliage NbTi47, des temps compris entre 8 et 30 heures et en moyenne de l'ordre de 20 heures, ce qui augmente significativement les temps de production.
Hormis la problématique des temps de production élevés, un pourcentage trop élevé de titane peut mener à la formation de phases martensitiques fragiles qui rendent la déformation du matériau difficile, voire impossible, ce qui ne convient alors pas à la réalisation d'un ressort spiral. Il convient dès lors de ne pas incorporer trop de titane dans l'alliage.
A ce jour, il y a toujours un besoin pour développer de nouvelles compositions chimiques remplissant les différents critères d'absence de phases fragiles et de réduction des temps de production pour la réalisation de ressorts spiraux.

Résumé de l'invention

L'invention a pour objet de proposer une nouvelle composition chimique de ressort spiral permettant de pallier aux inconvénients précités.

A cet effet, l'invention concerne un ressort spiral d'horlogerie tel que défini dans le revendication indépendante 1 annexée.

L'invention concerne également le procédé de fabrication de ce ressort spiral, ce procédé étant défini dans la revendication indépendante 8 annexée.

Avantageusement, l'étape de traitement thermique final pour finaliser la précipitation du titane et du zirconium et/ou de l'hafnium est réalisée dans un temps compris entre 4 et 8 heures à une température de maintien comprise entre 400°C et 600°C.

Outre la réduction du temps de fixage, le remplacement partiel du titane par du zirconium permet de réduire l'erreur secondaire comme explicité ci-après.

Description détaillée

L'invention concerne un ressort spiral d'horlogerie réalisé dans un alliage au moins ternaire comportant du niobium et du titane et un ou plusieurs éléments additionnels.

Selon l'invention, cet alliage est constitué:

- de Nb, Ti et au moins un élément choisi parmi le Zr et Hf,

- optionnellement d'au moins un élément choisi parmi le W et Mo,

- de traces éventuelles d'autres éléments choisis parmi O, H, C, Ta, Fe, N, Ni, Si, Cu, Al, avec les pourcentages en poids suivants :

  ◦ une teneur en Nb comprise entre 40 et 84%,

  ◦ une teneur totale en Ti, Zr et Hf comprise entre 16 et 55%,

  ◦ une teneur pour respectivement le W et le Mo comprise entre 0 et 2.5%,

  ◦ une teneur pour chacun desdits éléments choisis parmi O, H, C, Ta, Fe, N, Ni, Si, Cu, Al comprise entre 0 et 1600 ppm avec la somme desdites traces inférieure ou égale à 0.3% en poids.

De préférence, la teneur en poids de Nb est supérieure à 45%, voire supérieure ou égale à 50%, afin d'obtenir un pourcentage suffisant de phase bêta ayant un CTE fortement positif destiné à être compensé par le CTE négatif de la phase alpha de Ti,Zr,Hf.

La teneur en poids de Ti est maintenue à une teneur minimum de 15% car le Ti est plus économique que le Zr et l'Hf. En outre, il présente l'avantage d'avoir une température de fusion plus basse que le Zr et l'Hf, ce qui facilite la coulée.

Le pourcentage en poids d'oxygène est inférieur ou égal à 0.10% du total, voire encore inférieur ou égal à 0.085% du total.

Le pourcentage en poids d'hydrogène est inférieur ou égal à 0.01% du total, notamment inférieur ou égal à 0.0035% du total, voire encore inférieur ou égal à 0.0005% du total.

Le pourcentage en poids de carbone est inférieur ou égal à 0.04% du total, notamment inférieur ou égal à 0.020% du total, voire encore inférieur ou égal à 0.0175% du total.

Le pourcentage en poids de tantale est inférieure ou égale à 0.10% en poids du total.

Le pourcentage en poids de fer est inférieur ou égal à 0.03% du total, notamment inférieur ou égal à 0.025% du total, voire encore inférieur ou égal à 0.020% du total.

Le pourcentage en poids d'azote est inférieur ou égal à 0.02% du total, notamment inférieur ou égal à 0.015% du total, voire encore inférieur ou égal à 0.0075% du total.

Le pourcentage en poids de nickel est inférieur ou égal à 0.01% du total.

Le pourcentage en poids de silicium est inférieur ou égal à 0.01% du total.

Le pourcentage en poids de cuivre est inférieur ou égal à 0.01% du total, notamment inférieur ou égal à 0.005% du total.

Le pourcentage en poids d'aluminium est inférieur ou égal à 0.01% du total.

Selon l'invention, le Ti est en partie remplacé par du Zr et/ou de l'Hf formant tout comme le Ti des précipités alpha, de manière à accélérer la précipitation lors du fixage et dès lors à diminuer les délais de production. La somme de la teneur en Zr et Hf est comprise entre 10 et 25% et encore plus préférentiellement entre 15 et 25% en poids.

Avantageusement, le Ti est au moins remplacé par du Zr qui permet également de réduire l'erreur secondaire qui est une mesure de la courbure de la marche qui est généralement approximée par une droite passant par deux points (8°C et 38°C). Des essais ont été réalisés sur des alliages binaires Nb-Ti avec un pourcentage en poids de Ti de 47% (NbTi47) et Nb-Zr avec des pourcentages en poids de Zr compris entre 0 et 70% pour montrer respectivement l'effet du Ti et du Zr sur l'erreur secondaire. L'erreur secondaire est mesurée à 23°C. Il s'agit de l'écart de marche à 23°C par rapport à la droite reliant la marche à 8°C à celle à 38°C. Par exemple, la marche à 8°C, 23°C et 38°C peut être mesurée à l'aide d'un appareil Witschi type chronoscope.

Le tableau 1 ci-dessous reprend les données pour le Nb pur, l'alliage NbTi47 et l'alliage Nb-Zr en fonction du pourcentage en poids de Zr. Le Nb pur a une erreur secondaire à 23°C de -6,6 s/j. La précipitation du Ti dans l'alliage NbTi47 compense l'effet négatif du Nb avec cependant une remontée trop importante avec une valeur positive atteignant 4,5 s/j. Les alliages Nb-Zr ont par contre une erreur secondaire négative pour une teneur en Zr supérieure à 0%, voire nulle pour des teneurs en Zr supérieures ou égales à 45% en poids. Il s'ensuit que le remplacement partiel du Ti par du Zr dans un alliage ternaire permet de compenser l'effet trop positif du Ti sur l'erreur secondaire. Ajouter quelques pourcents en poids de Zr permet déjà de ramener l'erreur secondaire à une valeur plus proche de 0 que pour l'alliage binaire NbTi47. Ainsi, avantageusement, la teneur en Zr est au moins de 5% en poids.

Tableau 1

| Alliage | % pds | Erreur secondaire à 23°C |
|---|---|---|
| Niobium pur | 0% | -6,6 s/j |
| NbTi47 | 47% | 4.5 s/j |
| | | |
| $Nb_{30}Zr_{70}$ | 70% | -0,2 s/j |
| $Nb_{45}Zr_{55}$ | 55% | 0,0 s/j |
| $Nb_{50}Zr_{50}$ | 50% | 0,2 s/j |
| $Nb_{55}Zr_{45}$ | 45% | 0,0 s/j |
| $Nb_{60}Zr_{40}$ | 40% | -3,0 s/j |
| $Nb_{65}Zr_{35}$ | 35% | -4,1 s/j |
| $Nb_{70}Zr_{30}$ | 30% | -4,8 s/j |
| $Nb_{80}Zr_{20}$ | 20% | -5,0 s/j |
| $Nb_{85}Zr_{15}$ | 15% | -5,8 s/j |
| $Nb_{90}Zr_{10}$ | 10% | -6,0 s/j |
| $Nb_{100}$ | 0% | -6,6 s/j |

L'alliage peut en outre comporter du W et du Mo dans une teneur en poids pour chacun comprise entre 0 et 2.5% afin d'augmenter le module de Young de l'alliage, ce qui permet pour un couple donné du ressort de réduire l'épaisseur du spiral et par là-même d'alléger le spiral.

De façon avantageuse, le ressort spiral selon l'invention a une microstructure multiphasée comportant du niobium en phase bêta cubique centré, et une unique phase alpha de titane et de zirconium et/ou d'hafnium.

Pour obtenir une telle microstructure, il est nécessaire de finaliser la précipitation en phase alpha par traitement thermique lors du fixage du ressort dans le procédé de fabrication mettant en oeuvre successivement les étapes suivantes :

- une étape de mise à disposition ou d'élaboration d'une ébauche. Par exemple, l'ébauche peut être élaborée par fusion des éléments dans un four à l'arc électrique ou à canon d'électrons pour former une billette ou un lingot qui est forgé à chaud puis déformé à froid et traité thermiquement entre les phases de déformation. L'ébauche est réalisée dans un alliage au moins ternaire constitué:

- de Nb, Ti et au moins un élément choisi parmi le Zr et Hf,
- optionnellement d'au moins un élément choisi parmi le W et Mo,
- de traces éventuelles d'autres éléments choisis parmi O, H, Ta, C, Fe, N, Ni, Si, Cu, Al, avec les pourcentages en poids suivants :

  ○ une teneur en Nb comprise entre 40 et 84%,
  ○ une teneur totale en Ti, Zr et Hf comprise entre 16 et 55%, avec une teneur en Ti est supérieure ou égale à 15% en poids, et avec une somme de la teneur en Zr et Hf comprise entre 10 et 25% en poids,
  ○ une teneur pour respectivement le W et le Mo comprise entre 0 et 2.5%,
  ○ une teneur pour chacun desdits éléments choisis parmi O, H, Ta, C, Fe, N, Ni, Si, Cu, Al comprise entre 0 et 1600 ppm avec la somme desdites traces inférieure ou égale à 0.3% en poids,

- une étape de trempe de type bêta de ladite ébauche, de façon à ce que le titane dudit alliage soit essentiellement sous forme de solution solide avec le niobium en phase bêta, le zirconium et/ou l'hafnium étant également essentiellement sous forme de solution solide,
- une étape d'application audit alliage d'une succession de séquences de déformation suivie d'un traitement thermique intermédiaire. On entend par déformation une déformation par tréfilage et/ou laminage. Le tréfilage peut nécessiter l'utilisation d'une ou plusieurs filières lors d'une même séquence ou lors de différentes séquences si nécessaire. Le tréfilage est réalisé jusqu'à l'obtention d'un fil de section ronde. Le laminage peut être effectué lors de la même séquence de déformation que le tréfilage ou dans une autre séquence. Avantageusement, la dernière séquence appliquée à l'alliage est un laminage de préférence à profil rectangulaire compatible avec la section d'entrée d'une broche d'estrapadage.
- une étape d'estrapadage pour former le ressort spiral,
- une étape de traitement thermique final.

Dans ces séquences couplées de déformation-traitement thermique, chaque déformation est effectuée avec un taux de déformation donné compris entre 1 et 5, ce taux de déformation répondant à la formule classique $2\ln(d0/d)$, où d0 est le diamètre de la dernière trempe bêta, et où d est le diamètre du fil écroui. Le cumul global des déformations sur l'ensemble de cette succession de séquences amène un taux total de déformation compris entre 1 et 14. Chaque séquence couplée de déformation-traitement thermique comporte, à chaque fois, un traitement thermique de précipitation de la phase alpha Ti, Zr et/ou Hf.

La trempe bêta préalable aux séquences de déformation et de traitement thermique est un traitement de mise en solution, avec une durée comprise entre 5 minutes et 2 heures à une température comprise entre 700°C et 1000°C, sous vide, suivie d'un refroidissement sous gaz.

Plus particulièrement encore, cette trempe bêta est un traitement de mise en solution, d'1 heure à 800°C sous vide, suivie d'un refroidissement sous gaz.

Pour revenir aux séquences couplées de déformation-traitement thermique, le traitement thermique est un traitement de précipitation d'une durée comprise entre 1 heure et 200 heures à une température comprise entre 300°C et 700°C. Plus particulièrement, la durée est comprise entre 3 heures et 30 heures à une température comprise entre 400°C et 600°C.

Plus particulièrement, le procédé comporte entre une et cinq séquences couplées de déformation-traitement thermique.

Plus particulièrement, la première séquence couplée de déformation-traitement thermique comporte une première déformation avec au moins 30 % de réduction de section.

Plus particulièrement, chaque séquence couplée de déformation-traitement thermique, autre que la première, comporte une déformation entre deux traitements thermiques avec au moins 25 % de réduction de section.

Plus particulièrement, après cette élaboration de ladite ébauche en alliage, et avant les séquences de déformation-traitement thermique, dans une étape supplémentaire, on ajoute à l'ébauche une couche superficielle de matériau ductile pris parmi le cuivre, le nickel, le cupro-nickel, le cupro-magnanèse, l'or, l'argent, le nickel-phosphore Ni-P et le nickel-bore Ni-B, ou similaire, pour faciliter la mise en forme sous forme de fil lors de la déformation. Et, après les séquences de déformation-traitement thermique ou après l'étape d'estrapadage, on débarrasse le fil de sa couche du matériau ductile, notamment par attaque chimique.

Dans une variante, on dépose la couche superficielle de matériau ductile de façon à constituer un ressort spiral dont le pas n'est pas un multiple de l'épaisseur de la lame. Dans une autre variante, on dépose la couche superficielle de matériau ductile de façon à constituer un ressort dont le pas est variable.

Dans une application horlogère particulière, du matériau ductile ou du cuivre est ainsi ajouté à un moment donné pour faciliter la mise en forme sous forme de fil, de telle manière à ce qu'il en reste une épaisseur de 10 à 500 micromètres sur le fil au diamètre final de 0.3 à 1 millimètres. Le fil est débarrassé de sa couche de matériau ductile ou cuivre notamment par attaque chimique, puis est laminé à plat avant la fabrication du ressort proprement dit par estrapadage.

L'apport de matériau ductile ou cuivre peut être galvanique, ou bien mécanique, c'est alors une chemise ou un tube de matériau ductile ou cuivre qui est ajusté sur une barre de l'alliage à un gros diamètre, puis qui est amincie au cours des étapes de déformation du barreau composite.

L'enlèvement de la couche est notamment réalisable par attaque chimique, avec une solution à base de cyanures ou à base d'acides, par exemple d'acide nitrique.

Le traitement thermique final est réalisé pendant une durée comprise entre 1 heure et 200 heures à une température comprise entre 300°C et 700°C. Plus particulièrement, la durée est comprise entre 3 heures et 30 heures à une température comprise entre 400°C et 600°C. Avantageusement, la durée est comprise entre 4 et 8 heures avec un maintien à une température comprise entre 400°C et 600°C. Durant ce traitement thermique final, la précipitation du titane ainsi que de l'hafnium et/ou du zirconium en phase alpha est finalisée.

Par une combinaison adéquate de séquences de déformation et de traitement thermique, il est possible d'obtenir une microstructure très fine, en particulier nanométrique, comportant du niobium bêta et une phase alpha de titane et d'hafnium et/ou de zirconium. Cet alliage combine une limite élastique très élevée, supérieure au moins à 500 MPa et un module d'élasticité supérieur ou égal à 100 GPa et de préférence supérieur ou égal à 110 GPa. Cette combinaison de propriétés convient bien pour un ressort spiral. En outre, cet alliage au moins ternaire niobium-titane-hafnium et/ou zirconium selon l'invention se laisse facilement recouvrir de matériau ductile ou cuivre, ce qui facilite grandement sa déformation par tréfilage.

Cet alliage présente également un effet similaire à celui de l' « Elinvar », avec un coefficient thermo-élastique pratiquement nul dans la plage de températures d'utilisation usuelle de montres, et apte à la fabrication de spiraux auto-compensateurs.

## Revendications

1. Ressort spiral destiné à équiper un balancier d'un mouvement d'horlogerie, **caractérisé en ce que** le ressort spiral est réalisé dans un alliage constitué :

   - de Nb, Ti et au moins un élément choisi parmi le Zr et Hf,
   - optionnellement d'au moins un élément choisi parmi le W et Mo,
   - de traces éventuelles d'autres éléments choisis parmi O, H, Ta, C, Fe, N, Ni, Si, Cu, Al, avec les pourcentages en poids suivants :

     - une teneur en Nb comprise entre 40 et 84%,
     - une teneur totale en Ti, Zr et Hf comprise entre 16 et 55% avec une teneur en Ti est supérieure ou égale à 15% en poids, et avec une somme de la teneur en Zr et Hf comprise entre 10 et 25% en poids
     - une teneur pour respectivement le W et le Mo comprise entre 0 et 2.5%,
     - une teneur pour chacun desdits éléments choisis parmi O, H, Ta, C, Fe, N, Ni, Si, Cu, Al comprise entre 0 et 1600 ppm avec la somme desdites traces inférieure ou égale à 0.3% en poids.

2. Ressort spiral selon la revendication précédente, **caractérisé en ce que** la teneur en Nb est supérieure à 45% en poids.

3. Ressort spiral selon l'une des revendications précédentes, **caractérisé en ce que** la somme de la teneur en Zr et Hf est comprise entre 15 et 25% en poids.

4. Ressort spiral selon l'une des revendications précédentes, **caractérisé en ce qu'**il comporte au moins 5% en poids de Zr.

5. Ressort spiral selon l'une des revendications précédentes, **caractérisé en ce qu'**il comporte du Zr et de l'Hf.

6. Ressort spiral selon l'une des revendications précédentes, ayant une microstructure comportant du Nb en phase bêta et du Ti ainsi que du Zr et /ou du Hf en phase alpha.

7. Ressort spiral selon l'une des revendications précédentes, **caractérisé en ce qu'**il a une limite élastique supérieure ou égale à 500 MPa, et un module d'élasticité supérieur ou égal à 100 GPa et de préférence supérieur ou égal à 110 GPa.

8. Procédé de fabrication d'un ressort spiral destiné à équiper un balancier d'un mouvement d'horlogerie, **caractérisé en ce qu'**il comprend successivement :

- une étape de mise à disposition d'une ébauche dans un alliage au moins ternaire constitué:
- de Nb, Ti et au moins un élément choisi parmi le Zr et Hf,
- optionnellement d'au moins un élément choisi parmi le W et Mo,
- de traces éventuelles d'autres éléments choisis parmi O, H, Ta, C, Fe, N, Ni, Si, Cu, Al, avec les pourcentages en poids suivants :

◦ une teneur en Nb comprise entre 40 et 84%,
◦ une teneur totale en Ti, Zr et Hf comprise entre 16 et 55% avec une teneur en Ti est supérieure ou égale à 15% en poids, et avec une somme de la teneur en Zr et Hf comprise entre 10 et 25% en poids
◦ une teneur pour respectivement le W et le Mo comprise entre 0 et 2.5%,
◦ une teneur pour chacun desdits éléments choisis parmi O, H, Ta, C, Fe, N, Ni, Si, Cu, Al comprise entre 0 et 1600 ppm avec la somme desdites traces inférieure ou égale à 0.3% en poids,

- une étape de trempe de type bêta de ladite ébauche, de façon à ce que le titane dudit alliage soit essentiellement sous forme de solution solide avec le niobium en phase bêta, le zirconium et/ou l'hafnium étant également essentiellement sous forme de solution solide,
- une étape d'application audit alliage d'une succession de séquences de déformation suivie d'un traitement thermique intermédiaire,
- une étape d'estrapadage pour former le ressort spiral,
- une étape de traitement thermique final.

9. Procédé de fabrication d'un ressort spiral selon la revendication précédente, **caractérisé en ce que** la trempe de type bêta est un traitement de mise en solution, avec une durée comprise entre 5 minutes et 2 heures à une température comprise entre 700°C et 1000°C, sous vide, suivie d'un refroidissement sous gaz.

10. Procédé de fabrication d'un ressort spiral selon la revendication 8 ou 9, **caractérisé en ce que** la trempe de type bêta est un traitement de mise en solution d'1 heure à 800°C sous vide, suivie d'un refroidissement sous gaz.

11. Procédé de fabrication d'un ressort spiral selon l'une des revendications 8 à 10, **caractérisé en ce que** le traitement thermique final ainsi que le traitement thermique intermédiaire de chaque séquence est un traitement de précipitation du Ti et du Zr et/ou Hf en phase alpha d'une durée comprise entre 1 heure et 200 heures à une température de maintien comprise entre 300°C et 700°C.

12. Procédé de fabrication d'un ressort spiral selon l'une des revendications 8 à 11, **caractérisé en ce que** le traitement thermique final est réalisé à une température de maintien comprise entre 400°C et 600°C pendant une durée comprise entre 4 et 8 heures.

13. Procédé de fabrication d'un ressort spiral selon l'une des revendications 8 à 12, **caractérisé en ce que**, après l'étape de mise à disposition de l'ébauche en alliage, et avant l'étape d'application d'une succession de séquences, on ajoute à ladite ébauche une couche superficielle de matériau ductile pris parmi le cuivre, le nickel, le cupro-nickel, le cupro-magnanèse, l'or, l'argent, le nickel-phosphore Ni-P et le nickel-bore NiB, pour faciliter la mise en forme sous forme de fil et **en ce que**, avant ou après l'étape d'estrapadage, on débarrasse ledit fil de sa couche dudit matériau ductile par attaque chimique.

**Patentansprüche**

1. Spiralfeder, die dazu bestimmt ist, eine Unruh eines Uhrwerks auszustatten, **dadurch gekennzeichnet, dass** die Spiralfeder aus einer Legierung hergestellt ist, bestehend:

- aus Nb, Ti und mindestens einem Element, das aus Zr und Hf ausgewählt ist,
- optional mindestens einem Element, das aus W und Mo ausgewählt ist,
- aus möglichen Spuren anderer Elemente, die aus O, H, Ta, C, Fe, N, Ni, Si, Cu, Al ausgewählt sind, mit den folgenden Gewichtsprozentsätzen:

- einem Gehalt an Nb, der zwischen 40 und 84 % liegt,
- einem Gesamtgehalt an Ti, Zr und Hf, der zwischen 16 und 55 % liegt, wobei der Gehalt an Ti größer oder gleich 15 Gew.-% ist, und mit einer Summe des Gehalts an Zr und Hf, die zwischen 10 und 25 Gew.-% liegt,
- einem Gehalt jeweils an W und Mo, der zwischen 0 und 2,5 % liegt,
- einem Gehalt für jedes der Elemente, die aus O, H, Ta, C, Fe, N, Ni, Si, Cu, Al ausgewählt sind, der zwischen 0 und 1600 ppm liegt, mit der Summe der Spuren, die kleiner oder gleich 0,3 Gew.-% ist.

2. Spiralfeder nach dem vorstehenden Anspruch, **dadurch gekennzeichnet, dass** der Gehalt an Nb größer als 45 Gew.-% ist.

3. Spiralfeder nach einem der vorstehenden Ansprüche, **dadurch gekennzeichnet, dass** die Summe des Gehalts an Zr und Hf zwischen 15 und 25 Gew.-% liegt.

4. Spiralfeder nach einem der vorstehenden Ansprüche, **dadurch gekennzeichnet, dass** sie mindestens 5 Gew.-% an Zr beinhaltet.

5. Spiralfeder nach einem der vorstehenden Ansprüche, **dadurch gekennzeichnet, dass** sie Zr und Hf beinhaltet.

6. Spiralfeder nach einem der vorstehenden Ansprüche, die eine Mikrostruktur aufweist, die Nb in der Beta-Phase und Ti, sowie Zr und/oder Hf in der Alpha-Phase beinhaltet.

7. Spiralfeder nach einem der vorstehenden Ansprüche, **dadurch gekennzeichnet, dass** sie eine Streckgrenze größer oder gleich 500 MPa und ein Elastizitätsmodul größer oder gleich 100 GPa und vorzugsweise größer oder gleich 110 GPa aufweist.

8. Verfahren zur Herstellung einer Spiralfeder, die dazu bestimmt ist, eine Unruh eines Uhrwerks auszustatten, **dadurch gekennzeichnet, dass** es nacheinander umfasst:

- einen Schritt des Bereitstellens eines Rohwerks aus einer mindestens ternären Legierung, bestehend:
- aus Nb, Ti und mindestens einem Element, das aus Zr und Hf ausgewählt ist,
- optional aus mindestens einem Element, das aus W und Mo ausgewählt ist,
- aus möglichen Spuren anderer Elemente, die aus O, H, Ta, C, Fe, N, Ni, Si, Cu, Al ausgewählt sind, mit den folgenden Gewichtsprozentsätzen:

  ◦ einem Gehalt an Nb, der zwischen 40 und 84 % liegt,
  ◦ einem Gesamtgehalt an Ti, Zr und Hf, der zwischen 16 und 55 % liegt, wobei der Gehalt an Ti größer oder gleich 15 Gew.-% ist, und mit einer Summe des Gehalts an Zr und Hf, die zwischen 10 und 25 Gew.-% liegt,
  ◦ einem Gehalt jeweils an W und Mo, der zwischen 0 und 2,5 % liegt,
  ◦ einem Gehalt für jedes der Elemente, die aus O, H, Ta, C, Fe, N, Ni, Si, Cu, Al ausgewählt sind, der zwischen 0 und 1600 ppm liegt, mit der Summe der Spuren, die kleiner oder gleich 0,3 Gew.-% ist,

- einen Schritt der Härtung vom Beta-Typ des Rohwerks, sodass das Titan der Legierung im Wesentlichen in Form einer festen Lösung mit dem Niob in der Beta-Phase vorliegt, wobei das Zirkonium und/oder Hafnium ebenfalls im Wesentlichen in Form einer festen Lösung vorliegt,
- einen Schritt des Anwendens auf die Legierung einer Folge von Verformungssequenzen, gefolgt von einer Zwischenwärmebehandlung,
- einen Schritt des Einrollens, um die Spiralfeder zu bilden,
- einen Schritt einer abschließenden Wärmebehandlung.

9. Verfahren zur Herstellung einer Spiralfeder nach dem vorstehenden Anspruch, **dadurch gekennzeichnet, dass** die Härtung vom Beta-Typ eine Lösungsglühbehandlung mit einer Dauer zwischen 5 Minuten und 2 Stunden bei einer Temperatur, die zwischen 700 °C und 1000 °C liegt, unter Vakuum, gefolgt von einer Abkühlung unter Gas ist.

10. Verfahren zur Herstellung einer Spiralfeder nach Anspruch 8 oder 9, **dadurch gekennzeichnet, dass** die Härtung vom Beta-Typ eine Lösungsglühbehandlung von 1 Stunde bei 800 °C unter Vakuum, gefolgt von einer Abkühlung unter Gas ist.

**11.** Verfahren zur Herstellung einer Spiralfeder nach einem der Ansprüche 8 bis 10, **dadurch gekennzeichnet, dass** die abschließende Wärmebehandlung, sowie die Zwischenwärmebehandlung jeder Sequenz eine Ausfällungsbehandlung von Ti und Zr und/oder Hf in der Alpha-Phase mit einer Dauer, die zwischen 1 Stunde und 200 Stunden liegt, bei einer Haltetemperatur ist, die zwischen 300 °C und 700 °C liegt.

**12.** Verfahren zur Herstellung einer Spiralfeder nach einem der Ansprüche 8 bis 11, **dadurch gekennzeichnet, dass** die abschließende Wärmebehandlung bei einer Haltetemperatur, die zwischen 400 °C und 600 °C liegt, für eine Dauer durchgeführt wird, die zwischen 4 und 8 Stunden liegt.

**13.** Verfahren zur Herstellung einer Spiralfeder nach einem der Ansprüche 8 bis 12, **dadurch gekennzeichnet, dass** nach dem Schritt des Bereitstellens des Rohwerks aus einer Legierung und vor dem Schritt des Anwendens einer Folge von Sequenzen dem Rohwerk eine Oberflächenschicht aus einem duktilen Werkstoff, der aus Kupfer, Nickel, Kupfer-Nickel, Kupfer-Mangan, Gold, Silber, Nickel-Phosphor Ni-P und Nickel-Bor Ni-B genommen wird, beigegeben wird, um die Formgebung in Drahtform zu erleichtern, und dadurch, dass vor oder nach dem Schritt des Einrollens der Draht durch chemisches Ätzen von seiner Schicht aus dem duktilen Material befreit wird.


**Claims**

**1.** A spiral spring intended to equip a balance of a horological movement, **characterised in that** the spiral spring is made of an alloy consisting of:

- Nb, Ti and at least one element selected from Zr and Hf,
- optionally at least one element selected from W and Mo,
- possible traces of other elements selected from 0, H, Ta, C, Fe, N, Ni, Si, Cu, Al, with the following weight percentages:

- a content of Nb comprised between 40 and 84%,
- a total content of Ti, Zr and Hf comprised between 16 and 55% with a content of Ti greater or equal to 15% by weight, and with a sum of the content of Zr and Hf comprised between 10 and 25% in weight,
- a content for W and Mo respectively comprised between 0 and 2.5%,
- a content for each of said elements selected from O, H, Ta, C, Fe, N, Ni, Si, Cu, Al comprised between 0 and 1600 ppm with the sum of said traces less than or equal to 0.3% by weight.

**2.** The spiral spring according to the preceding claim, **characterised in that** the Nb content is greater than 45% by weight.

**3.** The spiral spring according to one of the preceding claims, **characterised in that** the sum of the content of Zr and Hf is comprised between 15 and 25% by weight.

**4.** The spiral spring according to one of the preceding claims, **characterised in that** it includes at least 5% by weight of Zr.

**5.** The spiral spring according to one of the preceding claims, **characterised in that** it includes Zr and Hf.

**6.** The spiral spring according to one of the preceding claims, having a microstructure including Nb in the beta phase and Ti as well as Zr and/or Hf in the alpha phase.

**7.** The spiral spring according to one of the preceding claims, **characterised in that** it has an elastic limit greater than or equal to 500 MPa, and a modulus of elasticity greater than or equal to 100 GPa and preferably greater than or equal to 110 GPa.

**8.** A method for manufacturing a spiral spring intended to equip a balance of a horological movement, **characterised in that** it successively comprises:

- a step of provision of a blank from an at least ternary alloy consisting of:
- Nb, Ti and at least one element selected from Zr and Hf,
- optionally at least one element selected from W and Mo,
- possible traces of other elements selected from O, H, Ta, C, Fe, N, Ni, Si, Cu, Al, with the following weight percentages:

- a content of Nb comprised between 40 and 84%,
- a total content of Ti, Zr and Hf comprised between 16 and 55% with a content of Ti greater or equal to 15% by weight, and with a sum of the content of Zr and Hf comprised between 10 and 25% in weight,
- a content for W and Mo respectively comprised between 0 and 2.5%,
- a content for each of said elements selected from O, H, Ta, C, Fe, N, Ni, Si, Cu, Al comprised between 0 and 1600 ppm with the sum of said traces less than or equal to 0.3% by weight,

- a step of beta type quenching of said blank, so that titanium of said alloy is essentially in the form of a solid solution with niobium in the beta phase, zirconium and/or hafnium also being essentially in the form of a solution solid,
- a step of application to said alloy of a succession of deformation sequences followed by an intermediate heat treatment,
- a winding step to form the spiral spring,
- a final heat treatment step.

9. The method for manufacturing a spiral spring according to the preceding claim, **characterised in that** the beta type quenching is a dissolution treatment, with a duration comprised between 5 minutes and 2 hours at a temperature comprised between 700°C and 1000° C, under vacuum, followed by cooling under gas.

10. The method for manufacturing a spiral spring according to claim 8 or 9, **characterised in that** the beta type quenching is a dissolution treatment lasting 1 hour at 800°C under vacuum, followed by cooling under gas.

11. The method for manufacturing a spiral spring according to one of claims 8 to 10, **characterised in that** the final heat treatment as well as the intermediate heat treatment of each sequence is a precipitation treatment of Ti and of Zr and/or Hf in the alpha phase with a duration comprised between 1 hour and 200 hours at a holding temperature comprised between 300°C and 700°C.

12. The method for manufacturing a spiral spring according to one of claims 8 to 11, **characterised in that** the final heat treatment is carried out at a holding temperature comprised between 400°C and 600°C for a duration comprised between 4 and 8 hours.

13. The method for manufacturing a spiral spring according to one of claims 8 to 12, **characterised in that**, after the step of providing the alloy blank, and before the step of applying a succession of sequences, a surface layer of ductile material taken from copper, nickel, cupro-nickel, cupro-manganese, gold, silver, nickel-phosphorus Ni-P and nickel-boron Ni-B is added to the blank to facilitate shaping into a wire shape and **in that**, before or after the winding step, said wire is stripped of its layer of said ductile material by chemical attack.

**EP 4 060 424 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018172164 A1